Europäisches Patentamt

European Patent Office

Office européen des brevets

(11) Publication number: **0 099 474**
**B1**

(12) **EUROPEAN PATENT SPECIFICATION**

(45) Date of publication of patent specification: **30.03.88**

(51) Int. Cl.⁴: **H 05 B 41/36**

(21) Application number: **83105954.8**

(22) Date of filing: **18.06.83**

(54) Electronic drive circuit for a dischange lamp.

(30) Priority: **12.07.82 US 397265**

(43) Date of publication of application:
**01.02.84 Bulletin 84/05**

(45) Publication of the grant of the patent:
**30.03.88 Bulletin 88/13**

(84) Designated Contracting States:
**BE DE FR GB NL**

(56) References cited:
**US-A-4 127 795**
**US-A-4 127 893**
**US-A-4 188 661**
**US-A-4 199 710**

(73) Proprietor: **GTE Products Corporation**
**100 West 10th Street**
**Wilmington, DE 19801 (US)**

(72) Inventor: **Knoll, William C.**
**RD No. 1, Box**
**Turbotville, PA (US)**
Inventor: **Bay, David L.**
**87 Bridge Street**
**Beverly Mass. 01915 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

### Technical field

This invention relates to an electronic drive circuit that preheats pairs of lamp filaments prior to lamp ignition and diverts power from those filaments subsequent to ignition as set forth in the preamble of claim 1. Such drive circuit is known from US—A—4 188 661.

### Background art

Aforementioned document describes an electronic drive circuit for driving a pair of fluorescent lamps. Central to the operation of that invention is a high frequency (20 to 30 KHz) inverter comprising a pair of transistors connected in series and operating in a push-pull mode. The inverter drives, via an output transformer, the cathode filaments of the lamps. The output transformer comprises a series-resonant primary winding coupled to the inverter output. The secondary of the output transformer includes two lamp voltage windings and three filament windings. Two filament windings separately supply current to one filament of each of the lamps. The third filament winding supplies current to the remaining two parallel-connected filaments. Also included on the secondary of the output transformer are three bias windings each being oppositely poled and connected in series between a respective filament winding and a filament. These bias windings are arranged so as to establish a voltage differential across the respective lamps sufficient to effect firing of the lamps.

The drive circuit further includes an interstage transformer having three primary-wound feedback windings provided by said bias windings and each coupled in a loop that includes at least one lamp filament and a filament winding. The secondary of the interstage transformer includes a pair of oppositely-poled windings coupled to the push-pull inputs of the inverter. Because the primary windings are coupled in a loop that includes the lamp filaments, they induce a voltage in the secondary proportional to the sum of filament currents. Proper phasing of the secondary windings provides the positive feedback necessary to sustain inverter operation. A modified feedback arrangement disclosing a single primary winding connected in a loop with the two parallel connected filaments is disclosed in US—A—4,127,893.

US—A—4,188,661 also discloses circuitry for enhancing the oscillator startup operation. Upon initial energization of the drive circuit, a capacitor connected in parallel with one of the secondaries of the interstage transformer is charged through a source of slowly developed DC voltage. When the charge across the capacitor reaches a given magnitude, a series connected diac is switched on, thereby discharging the capacitor through a relatively low impedance and animating a transient across one of the drive windings of the interstage transformer. This perturbation supplies base drive to at least one of the drive windings of the interstage transformer. This perturbation supplies base drive to at least one of the inverter transistors and assures oscillator startup. A voltage derived from the current in the primary of the output transformer is applied to the diac in a manner that renders the diac nonconducting during steady state operation of the ballast circuit.

The known circuit requires a rather complicated output transformer having a plurality of windings to provide the various voltages to preheat the filaments of the discharge lamp and to drive the lamp upon firing. Furthermore the filaments are also heated after ignition of the lamp to a great extent, which results in an undesirably high level of power consumption.

It is the object of the invention to provide a drive circuit of the aforementioned type having improved power efficiency and reliable shutdown of a ballast system as desired subsequent to the ignition of the discharge lamp.

This object is attained by the characterizing features of claim 1. Preferred embodiments of the invention are subject matter of the dependent claims.

In the drive circuit of the present invention, a unique electronic ballast circuit is provided, which includes a high frequency push-pull inverter with a feedback circuit connected to a load circuit and to the inverter for discontinuing operation of the inverter upon interruption of the load circuit. An impedance shunts the accompanying discharge lamp to provide preheating of the filaments of the discharge lamp prior to ignition thereof. Thus, upon preheating of the lamp, the impedance provides an alternating current path for the heater current and of a value which is preferably less than the impedance of the discharge lamp prior to ignition thereof.

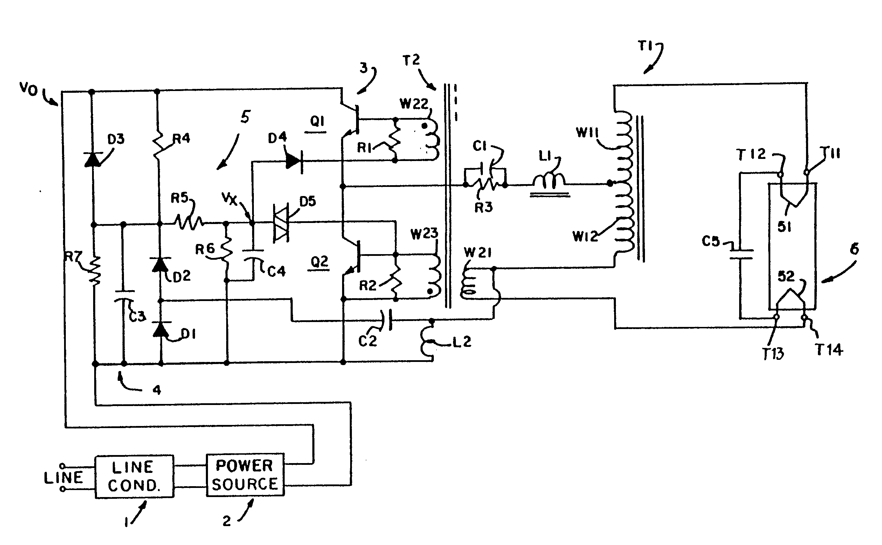

The invention is further explained with reference to the accompanying drawing.

### Brief description of the drawing

The sole drawing is a schematic diagram of an electronic drive system employing the subject invention, including a ballast system.

### Description of a preferred embodiment

For a better understanding of the present invention, together with the objects, advantages and capabilities thereof, refer to the following disclosure and appended claims in conjunction with the accompanying drawing.

Referring now to the drawing, the electronic ballast circuit derives its primary power from the AC line through a line conditioner 1. The line conditioner may include, inter alia, a transient suppressor, overload switch and line filter. (See. e.g. US—A—4,188,661). The output of the line conditioner is coupled to the input of a power source 2 in the form of a voltage supply which provides a nominal output voltage $V_o$, of 300 volts.

The core of the electronic ballast system illustrated in the drawing is the high frequency, series push-pull inverter 3 comprising NPN transistors Q1 and Q2. Q1 has a collector connected to the high side of the voltage supply and an emitter connected to the collector of Q2; the emitter of Q2 is in turn connected to the common or ground return of the voltage supply. The base-to-emitter junctions of both Q1 and Q2 are individually coupled by damping resistors R1 and R2, respectively. The output of inverter 3, that is, the signal at the junction of Q1 emitter and Q2 collector, is coupled through a parallel RC network including a resistor R3 and a capacitor C1 and through an inductance, L1, to a center tapped output transformer T1, comprising a primary winding W11 and a secondary winding W12. A detailed discussion of the construction and operation of T1 is presented below. In a preferred embodiment the center tapped end of W11 is coupled to the inverter output through L1 and the parallel RC network, while the other end is coupled to the input of what, for present purposes, will be considered a secondary voltage source 4.

The feedback necessary to sustain inverter operation is provided by an interstage transformer T2. The interstage transformer includes a primary winding, W21, having one end coupled to W12 and another end adapted to be coupled to a lamp filament. Also, included are opposite-poled secondary windings W22 and W23. As is apparent from the drawing, W21 completes a circuit loop that also includes T1 and filaments 51 and 52. Because of this arrangement the current that flows through those filaments must necessarily flow through W21 as well. The resulting signal developed in W21 is coupled to secondary windings W22 and W23 and is therefore fed back to the inverter input across the base-to-emitter junctions of Q1 and Q2 respectively. (Notice that W22 is coupled across the base-to-emitter junction of Q1 and W23 similarly coupled across Q2.) The phase opposition of the signals applied to Q1 and Q2, brought about by the relative (opposite) polarities of W22 and W23, as indicated on the drawing, assures oscillatory operation of the inverter.

Voltage source 4 includes an inductance L2 connected between one end of W12 and the common return. The junction of W12 and L2 is coupled through capacitor C2 to a voltage-doubling peak rectifier that includes diodes D1 and D2, charge storage capacitor C3, and resistor R7. D1 has a cathode connected to C3 and an anode connected to the cathode of D2. The other side of C3 as well as the anode of D2 is connected to the common return via R7 which is connected in parallel with C3. The output of the secondary voltage source 4 is coupled through a diode D3, in the anode-to-cathode direction, to the high side of the primary voltage source 2.

Operation of voltage supply 4 is dependent on the operation of the inverter circuit in the following manner. When operating, the inverter develops approximately a 20 KHz square wave at the junction of Q1 and Q2. (The frequency of the output signal is largely determined by the resonant frequency of C1 and W11, the effect of L1 being substantially negligible.) The current flowing in W11 is coupled to the common return through L2, thereby developing a periodic voltage across L2 in proportion to that current. That voltage is coupled through C2 to rectifying diodes D1 and D2 and is applied to charge storage capacitor C3. In standard fashion the charge stored in C3 will represent a voltage substantially equal to the peak-to-peak voltage across L2, less losses attributable to the rectification process. Normally the voltage developed by the secondary voltage source 4 will be less than that developed by the primary source 2 so that D3 will be reversed biased, the two sources isolated from each other, and negligible current drawn from the secondary source. However, under low-line or other aberrant conditions, the voltage at the output of the primary source 2 may drop so significantly that D3 will become forward biased and the secondary voltage source 4 will then be available and called upon to power the inverter circuitry.

Startup of the oscillator is assured by a startup circuit 5 that includes a charging resistor R4, voltage divider resistors R5 and R6, a clamping circuit, including clamping diode D4 and clamping capacitor C4, and a semiconductor switch in the form of diac D5.

R4 is coupled from the high side of $V_o$ to one side of C3 so that, subsequent to the energization of the ballast circuit, C3 begins to charge toward the voltage at the output of that source. (To be precise, it will take some time for output of $V_o$ to attain its nominal value but the duration of this delay can be expected to be de minimis in comparison with the R4C3 time constant.) R5 and R6 are series connected across C3, so that the voltage developed at the junction of R5 and R6, ultimately coupled to D5, will track the exponentially-rising voltage across 3. As illustrated in the drawing D5 has one end coupled to the output of the voltage divider, at the junction of R5 and R6, and another end coupled to an input of the inverter, at the base of Q2. Neglecting the effect of R3, the voltage, $V_x$, at the output of the voltage divider will increase roughly as

$$\frac{R6}{R5+R6} \; V_o \; (1-e-t/R4\,C3).$$

At some time determined by the values of the components represented in that relationship above, $V_x$ will exceed the breakover voltage of D5. D5 will fire, thereby supplying bias current to the base of Q2 and initiating operation of the inverter, after which the inverter will become self-sustaining. The salient advantage of this startup circuit is that startup of the inverter is inhibited until C3 of the secondary voltage source has become charged. As a result the inverter transistors are spared some deleterious effects attendent the initial current surge required to charge C3.

The startup circuit also includes a clamping circuit comprising D4, with a cathode connected to the inverter output and an anode connected to the voltage divider output, and C4, connected from there to ground. The clamping action of D4 and C4 prevents the inverter square wave output from randomly firing D5. In effect, the clamping circuit disables the starting circuit during steady state inverter operation so that Q1 and Q2 are free from transients that might result from the random firing of D5.

As illustrated in the drawing, the output of the inverter is coupled to the center tap of T1 which in turn drives a fluorescent lamp, appropriately coupled to associated sets of terminals (T11, T12, T13, T14). Filament current and voltage are supplied by the output transformer T1. T1 is adapted to be coupled at one end of its winding to terminal T11. The other end of the T1 winding is coupled to a first end of the primary winding W21 of the interstage transformer T2. The other end of W21 is adapted to be coupled to lamp terminal T14.

In order to assure preheating of the lamp filaments prior to ignition and greatly lessen filament heating subsequent to ignition, the ballast circuit includes a capacitive impedance element, that is, a capacitor C5 coupled between terminals T12 and T13.

As is well known, the effective impedance presented by a fluorescent lamp is much greater prior to than subsequent ignition. The capacitive impedance elements are chosen so that their effective impedances at the ballast operating frequency are less than the associated lamp impedance prior to ignition and substantially greater than the lamp impedance subsequent to ignition. (Lamp ignition occurs upon sufficient preheating of the lamps and the appearance of adequate voltage across the lamp filaments.)

Assuming a lamp presents an approximately infinite impedance prior to its ignition, (e.g., at least an order of magnitude greater than the impedances of the associated capacitive impedance elements at 25 KHz) then any output current flowing through T1 will flow identically in series with the effectively series-connected filaments and capacitance C5. Thus the filaments will be preheated before ignition occurs. Upon sufficient preheating of the filaments the lamp will ignite, ignition being accompanied by a substantial drop in the impedance of the lamp and a diversion of T1 output current from the lamp filaments and connecting capacitance to the lamp itself. In this manner the current flowing through the filaments will drop drastically with an attendent reduction in the amount of heat dissipated by those filaments. Because filament heating contributes nought to the light output of the lamp, the scheme described above will greatly lessen the power dissipated by the lamp load while concomitantly enhancing the efficiency of the ballast system.

In addition to offering improved efficiency, the ballast system described above represents a significant reduction in the number of components, particularly magnetic components, heretofore required in the output section of known ballast circuits. Furthermore, because the feedback signal developed in W21 is related to the lamp filament current and because the lamp filaments are series-connected via the capacitive impedance, removal of a lamp or of any lamp filament will necessarily result in shutdown of the ballast system, a virtual requirement given the abnormal loading conditions generally experienced under laboratory testing conditions.

Finally, although the subject invention is particularized to include a capacitor connected in series with the lamp filament string, it is clear that other impedance elements may be substituted in that position. What is required is that the elements exhibit an impedance substantially less than that of the lamp prior to ignition and an impedance substantially greater than that of the lamp subsequent to ignition. This of course contemplates not only a fixed impedance element but also circuit elements, the impedances of which vary or are made to vary according to lamp ignition. For example, a three terminal (semiconductor) device, triggered by lamp ignition, may be inserted in place of the capacitive element without departing from the inventive concept disclosed herein.

## Claims

1. An electronic drive circuit for a discharge lamp having a high frequency push-pull inverter (3) and an output circuit, said inverter (3) providing an oscillatory drive signal to said output circuit and said output circuit including an output transformer (T1), which is coupled to said inverter (3) by a series-connected inductor (L1) and capacitor (C1), said output transformer (T1) providing discharge voltage and heater current to the heater filaments of said discharge lamp (6), a feedback network coupled to said inverter (3) having a winding (W21) in series-connection with a transformer winding (W11, W12) characterized by:

said output transformer (T1) having series-connected primary and secondary windings (W11, W12) and a center tap coupled by said series-connected inductor (L1) and capacitor (C1) to said inverter (3),

a resistance (R3) connected in parallel to said capacitor (C1) of said series connection,

said primary winding (W11) being connected to one terminal (T11) of one (51) of said heater filaments, said secondary winding (W12) being connected to one terminal (T14) of the other heater filament (52) via said feedback winding (W21), the other terminals (T12, T13) of said filaments (51, 52) being connected with each other via an impedance (C5) providing an impedance shunting of said discharge lamp (6).

2. The electronic drive circuit of claim 1 characterized by said impedance element being in the form of a capacitor (C5).

3. The electronic drive circuit of claim 1 or 2 characterized by said impedance element (C5) providing an impedance less than the impedance presented by the associated discharge lamp (6) prior to lamp ignition and greater than the impedance presented by said discharge lamp (6) subsequent to lamp ignition.

## Patentansprüche

1. Elektronische Stromversorgungsschaltung für eine Entladungslampe mit einem Hochfrequenzgegentaktinverter (3) und einer Ausgangsschaltung, wobei der Inverter (3) ein schwingendes Treibersignal an die Ausgangsschaltung liefert und die Ausgangsschaltung einen Ausgangstransformator (T1) enthält, der mit dem Inverter (3) durch eine Serienschaltung aus einer Spule (L1) und einem Kondensator (C1) verbunden ist, wobei der Ausgangstransformator (T1) eine Entladespannung und einen Heizstrom an die Heizwendeln der Entladungslampe (6) liefert, mit einem Rückkopplungsnetzwerk, das mit dem Inverter (3) verbunden ist und eine Wicklung (W21) aufweist, die mit einer Transformatorwicklung (W11, W12) in Serie geschaltet ist, dadurch gekennzeichnet, daß der Ausgangstransformator (T1) in Serie geschaltete Primär- und Sekundärwicklungen (W11, W12) und eine Mittenanzapfung aufweist, die über die Serienschaltung aus der Spule (L1) und dem Kondensator (C1) mit dem Inverter (3) verbunden ist, daß ein Widerstand (R3) zu dem Kondensator (C1) der Serienschaltung parallelgeschaltet ist, daß die Primärwicklung (W11) mit dem einen Anschluß (T11) von einer (51) der Heizwendeln verbunden ist, die Sekundärwicklung (W12) mit dem einen Auschluß (T14) der anderen Heizwendel (52) über die Rückkopplungswicklung (W21) verbunden ist, die anderen Anschlüsse (T12, T13) der genannten Wendeln (51, 52) miteinander über eine Impedanz (C5) verbunden sind, die einen Impedanznebenschluß der Entladungslampe (6) darstellt.

2. Elektronische Stromversorgungsschaltung nach Anspruch 1, dadurch gekennzeichnet, daß das Impedanzelement ein Kondensator (C5) ist.

3. Elektronische Stromversorgungsschaltung nach Anspruch 1 oder 2, dadurch gekennzeichnet, daß das Impedanzelement (C5) eine Impedanz aufweist, die kleiner als die Impedanz ist, die die zugehörige Entladungslampe (6) vor dem Zünden hat und größer als die Impedanz ist, die die Entladungslampe (6) nach dem Zünden hat.

## Revendications

1. Circuit de pilotage électronique d'une lampe à décharge, comprenant un onduleur (3) à haute fréquence de type push-pull et un étage de sortie, le dit onduleur (3) délivrant un signal de pilotage oscillatoire appliqué au dit étage de sortie, ce dernier incluant un transformateur de sortie (T1) qui est relié au dit onduleur (3) par l'intermédiaire d'une branche comprenant en série une inductance (L1) et un condensateur (C1), le dit transformateur de sortie (T1) délivrant une tension de décharge et un courant de chauffage aux filaments de chauffage de la dite lampe à décharge (6), un réseau de réaction relié au dit onduleur (3) ayant un enroulement (W21) en série avec un enroulement (W11, W12) du transformateur, caractérisé par:

—le dit transformateur de sortie (T1) ayant ses enroulements primaire et secondaire (W11, W12) connectés en série et une prise centrale reliée au dit onduleur (3) par l'intermédiaire de la dite inductance (L1) en série avec le condensateur (C1);

—une résistance (R3) connectée en parallèle au dit condensateur (C1) de la dite branche;

—le dit enroulement primaire (W11) étant connecté à une broche (T11) de l'un (51) des dits filaments de chauffage, le dit enroulement secondaire (W12) étant relié à une broche (T14) de l'autre filament de chauffage (52) par l'intermédiaire du dit enroulement de réaction (W21), les autres broches (T12, T13) des dits filaments (51, 52) étant connectées entre elles par l'intermédiaire d'une impédance (C5) déterminant une impédance shuntant la dite lampe à décharge (6).

2. Circuit de pilotage électronique selon la revendication 1 caractérisé en ce que la dite impédance est constituée par un condensateur (C5).

3. Circuit de pilotage électronique selon la revendication 1 ou 2 caractérisé en ce que la valeur de la dite impédance (C5) est inférieure à celle de la lampe à décharge associée (6) avant l'amorçage de la lampe, et supérieure à celle de la dite lampe à décharge (6) après son amorçage.